# EUROPEAN PATENT SPECIFICATION

(11) **EP 3 570 507 B1**
(45) Date of publication and mention of the grant of the patent: **11.01.2023**
(21) Application number: 19171708.1
(22) Date of filing: 29.04.2019
(51) Int. Cl.: H04L 49/55, H04L 49/65, H04L 69/40

(54) **SWITCH CONFIGURATION SYNCHRONIZATION**
SCHALTERKONFIGURATIONSSYNCHRONISIERUNG
SYNCHRONISATION DE CONFIGURATION DE COMMUTATION

(30) Priority: 30.04.2018 US 201815966887
(43) Date of publication of application: 20.11.2019
(73) Proprietor: Hewlett Packard Enterprise Development LP, Spring, Texas 77389 (US)
(72) Inventor: WILD, Christopher, Santa Clara, CA 95054 (US); ZAYATS, Michael, Santa Clara, CA 95054 (US); IYER, Ganesh M., Santa Clara, CA 95054 (US); SHAH, Dhruv, Santa Clara, CA 95054 (US)
(74) Representative: Fleuchaus, Michael A.

(56) References cited:
- US-A1- 2005 071 386
- US-A1- 2006 215 547
- US-A1- 2014 146 661

## Description

### BACKGROUND

A network device, such as a switch, may be configured to operate network traffic in a desired way. It may be beneficial to have a back-up of this configuration data.
US 2014/146661 A1 describes a method for facilitating process restart in an IS-IS system. US 2006/215547 A1 describes a method for providing link state routing protocol redundancy in a router. US 2005/071386 A1 describes a technique for data synchronization.

### BRIEF DESCRIPTION OF THE DRAWINGS

The following detailed description references the drawings, wherein:
FIG. 1A is a block diagram of an example system where switch configuration synchronization may be useful;
FIG. 1B is a block diagram of another example system for switch configuration synchronization;
FIG. 2 is a flowchart of another example method for mapping databases for switch configuration synchronization;
FIG. 3 is a flowchart of another example method for synchronizing databases for switch configuration;
FIG. 4 is a flowchart of an example method for switch configuration synchronization; and
FIG. 5 is a block diagram of another example system for switch configuration synchronization.

### DETAILED DESCRIPTION

Traditionally, a network device, such as a switch, may be configured by a text file or the like. For example, many switches may be configured via Command-Line Interface (CLI). In order to synchronize the configuration of the primary switch with a peer switch the text file may be transmitted from one switch to the other switch. In other words, the configuration data to be synchronized may be buffered up by the primary switch and transmitted to the peer switch. Once received, the configuration data may be saved to the configuration file of the peer switch.

However, there may be problems with this approach. For example, it may be difficult to reverse configuration changes, especially when numerous configurations changes are made simultaneous or in close time proximity. If numerous changes are made, there may be certain ordering dependencies. For example, if four changes are made, the first two may half to resolve before the third can take effect. If that third change needs to be reversed, the first two may need to be reversed as well. This may create numerous problems and prevent certain configuration changes from being reversed.

The present disclosure describes aspects of a switch configuration synchronization system that may identify configuration changes, map them quickly and identify any errors. A mapping may be created between the databases. A first mapping may be created on the primary database mapping the elements of the primary database to the peer database and a second mapping may be created on the peer database mapping the elements of the peer database to the primary database. With these two mappings created, changes between the two may be identified and identify areas that require attention. If a reference is missing, a specific error message may be flagged and a user may be presented with a request for the specific missing information, in this case, the reference.

In this manner, configuration changes can be performed by rolling back the database to a previous state. Once the database has been rolled back to a previous configuration, the configuration can be easily synchronized to a peer database. This may reduce or remove the dependency problems discussed above.

A benefit of the architecture is compatibility with modern protocols and standards. Whereas text bases configurations, such as CLI, may be a more rigid approach due to the ordering issues discussed above, aspects of the system disclosed herein may be better suited for modern programmable standards, such as REST, which would allow a user to programmatically set up events and responses using the configuration database as well as allow for customized logging.

Another benefit of the present disclosure may be that it allows for self-healing, whereas traditional text based methods may not be. Typically, before a textual configuration change is applied, the textual change may be tested for use on each device it is configure. In other words, a two-step roll out for configuration changes. In contrast, the present disclosure describes a one-step roll out. If there is a missing reference, you can push the change to the database and that change will automatically be synchronized and applied.

A method for switch configuration synchronization may include generating a first set of unique identifiers for each row in each table of a first database and a second set of unique identifiers for each row in each table of a second database, wherein the first database is configured to operate a first switch operating traffic on a network and the second database is configured to operate a second switch on the network, the first switch and the second switch configured to operate traffic on the network. The method may also include creating a mapping between the first set of unique identifiers and the second set of unique identifiers and determining that a first row of the first database is marked to be synchronized, the first row corresponding to a first unique row ID. The method may also include retrieving a second row of the second database corresponding to a second unique row ID mapped to the first unique row ID and updating the second row.

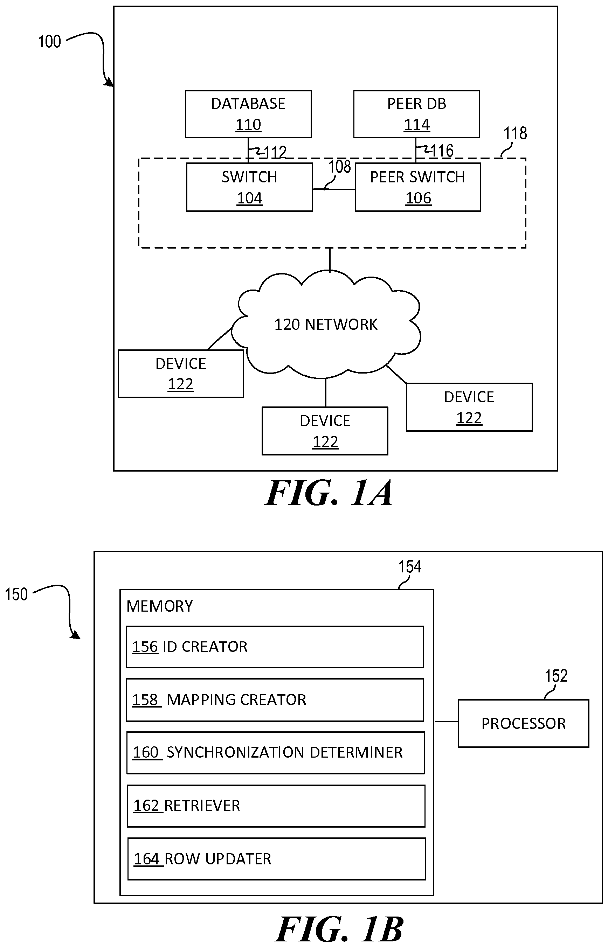

FIG. 1A is a block diagram of an example system 100 where switch configuration synchronization may be useful. System 100 may implement a database driven network switch architecture. The system 100 may include a primary switch 104 and a peer switch 106 connected by a link 108. Primary switch 104 may be connected to a database 110 via a link 112 and peer switch 106 may be connected to a peer database 114 via a link 116. Links 108, 112 and 116 may be a physical link, such as an Ethernet connection or other physical connection, a wireless connection, a virtual connection, etc.

A network switch, such as switch 104 and peer switch 106, may have routing capabilities such that the switch is responsible for routing data along a route (or equivalently, path) in a network 120. The switch may perform routing of data based on routing information accessible by the router. For example, the routing information can be stored on a storage medium of the router, or on a storage medium separate from but accessible by the router.

A database, such as a time series database 110 and peer database 114, may store some or all of the configuration, status, states and statistics of the network 120, the switches 104 and 106 and/or other devices on the network 120 at any given point at time. The different state data may be accessed from the databases 110 and 114 either individually (data for a given time, a given device, etc.) or in aggregate (data aggregated for particular items over a given time period, etc.). In other words, the state of the switch may be retrieved from any arbitrary state to any other arbitrary state by manipulating the database. The switch 104 and/or 106 may respond to these manipulations by reconfiguring itself to and perform any functionality required to achieve that state.

In this manner, the switches 104 and/or 106 access to numerous data points of information for devices 122 on the network 120 and the network 120 itself at different points in time. This also provides the switches 104 and/or 106 with a wide variety of information for monitoring, analysis, troubleshooting, etc.

In an environment utilizing a switch, there may be a need for a high availability. High availability may refer to a system and/or component that continuously operates for a long length of time. This time period may be represented as a percentage of uptime. For example, there may be a desirability to have a networking switch be available for 99.9% of up time. Of course this is an example percentage and other amounts of up time may be acceptable and/or desirable in a given environment.

The network 120 may also implement an active/active switching architecture. In this architecture, multiple switches, typically two (such as switch 104 and peer switch 106), are configured to service the network 120. In other words, the architecture includes two switches to mirror the traffic in between them and can act as an redundant system. If one switch goes down, the other can take over without a user having to take action.

Specifically, the primary switch 104 may access a primary database 110 configured to service the network 120. The peer switch 106, may access the peer database 114 and the peer database 114 may be synchronized to the primary database 110. The primary 104 and peer switch 106 may be connected to each other for control and data transfer. Moreover, the combination of the primary switch 104 and the peer switch 106 may be presented to the user as a single virtualized switch 118. In the event that the primary switch 104 goes down, no traffic may be lost, although the total amount of bandwidth available to the system may be reduced. Moreover, this architecture provides the ability to configure one switch 104 and have the configuration synced to the peer switch 106. This keeps the network facing elements consistent across management changes to allow for load balancing and high availability in case of failure.

Virtualized system 118 may allow a user to visualize and/or access the system 100 as a whole logically through one interface. The architecture may allow a user to discover certain conditions (such as anomalies, errors, etc.) in the system 100 in a programmable manner. Accordingly, a user may set certain database parameters, conditions in the network 120, for monitoring. For example, one or more VLANs may be monitored in the network (via, for example, a user created script). In the event that a VLAN in the network changes status (i.e. from active to non-active), a user and/or device may be notified, presented via a variety of information about the VLAN and devices running the VLAN as well as possible remedial actions to remedy the problem. In some aspects, these remedial actions may be automatically performed.

In addition to discovering and detecting events, anomalies, conditions, etc., errors may be dealt with programmatically. For example, if certain parameters meet certain conditions, certain actions to correct these parameters or other network conditions may be performed and/or a user may be notified to take manual intervention steps. Similarly, the parameters can be monitored over a certain period of time and the parameters can be compared over the period of time and/or compared to historical data. Additionally, a set of repeatable actions can be programmed to occur in certain circumstances based on the monitored parameters and/or other parameters. These automated responses may be programmed via REST, Ansible, as well as other scripting languages that can access data stored in a database.

Turning now to FIG. 1B, a block diagram of an example system 150 for switch configuration synchronization. System 150 may include a processor 152 and a memory 154 that may be coupled to each other through a communication link (e.g., a bus). Processor 152 may include a single or multiple Central Processing Units (CPU) or another suitable hardware processor(s). In some examples, memory 154 stores machine readable instructions executed by processor 152 for system 150. Memory 154 may include any suitable combination of volatile and/or non-volatile memory, such as combinations of Random Access Memory (RAM), Read-Only Memory (ROM), flash memory, and/or other suitable memory.

Memory 154 stores instructions to be executed by processor 152 including instructions for ID creator 156, mapping creator 158, synchronization determiner 160, retriever 162, row updater 164, and/or other components. According to various implementations, system 150 may be implemented in hardware and/or a combination of hardware and programming that configures hardware. Furthermore, in FIG. 1B and other Figures described herein, different numbers of components or entities than depicted may be used.

Processor 152 may execute ID creator 156 to create a unique string for each row in a first and second database. The first database may be configured to operate a first switch operating traffic on a network and the second database may be configured to operate a second switch on the network. Both the first and second switches may be configured, via the first and second databases, respectively, to actively manage the network. Processor 152 may execute mapping creator 158 to create a mapping between a first set of unique strings created for the first database and a second set of unique strings created for the second database.. The first and the second switch may be configured to appear as a single virtual switch in a management pane.

Processor 152 may execute synchronization determiner 160 to identify a row from the first database that is marked to be synchronized. The first row may correspond to a first unique row ID. Processor 152 may execute retriever 162 to retrieve a second row of the second database corresponding to the identified row. Processor 152 may execute row updater 164 to update the second row.

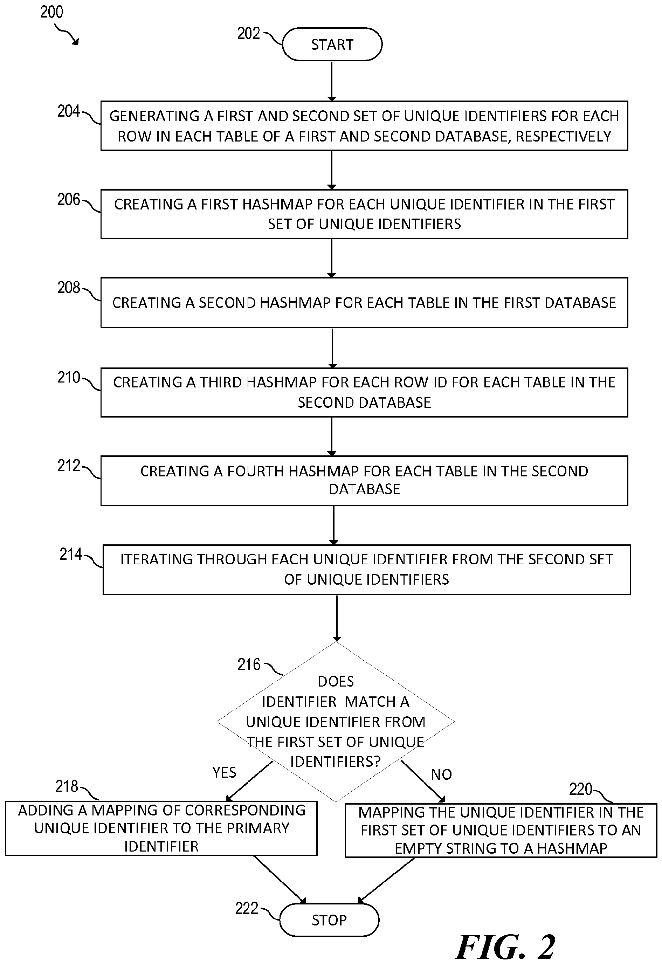

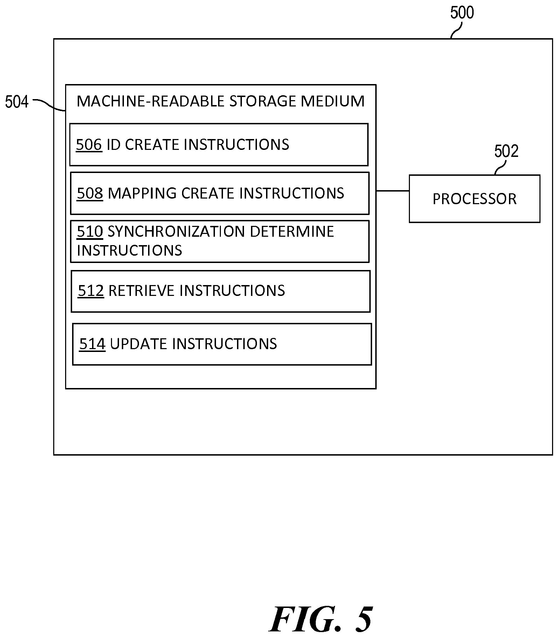

Referring now to FIGS. 2-4, flow diagrams are illustrated in accordance with various examples of the present disclosure. The flow diagrams represent processes that may be utilized in conjunction with various systems and devices as discussed with reference to the preceding figures, such as, for example, system 100 described in reference to Fig. 1A, system 150 described in reference to Fig. 1B and/or system 500 described in reference to Fig. 5. While illustrated in a particular order, the flow diagrams are not intended to be so limited. Rather, it is expressly contemplated that various processes may occur in different orders and/or simultaneously with other processes than those illustrated. As such, the sequence of operations described in connection with FIGS. 2-4 are examples and are not intended to be limiting. Additional or fewer operations or combinations of operations may be used or may vary without departing from the scope of the disclosed examples. Thus, the present disclosure merely sets forth possible examples of implementations, and many variations and modifications may be made to the described examples.

FIG. 2 is a flowchart of an example method 200 for mapping databases used in switch configuration synchronization. For example, method 200 may be used in an environment similar to system 100, described above in reference to Fig. 1A, to create a mapping between databases (such as a primary database and a peer database), used for configuring network switches. Sample database used in conjunction with the method and system of Fig. 1A may be an Open vSwitch Database (OVSDB). The databases may have a plurality of rows and unique identifiers for the rows.

Method 200 may start at block 202 and continue to block 204, where the method 200 may include generating a first set of unique identifiers, such as a identifier token string, for each row in each table of a first database and generating a first set of unique identifiers for each row in each table of a first database. Specifically, the method may include generating unique identifier token string for each row in each table for both the database instances based on index columns in a table. In this manner, a unique string is created for each row present in the database. This unique strings may be used (as will be described below) to algorithmic way match rows in one database to a second database. Each unique identifier in the database may have an associated index which depends on the schema definition of the respective table entry in the database. This index may be represented using a combination of index columns defined in the database schema. The index value may be computed using the content of such defined index values in the database.

At block 206, the method may include creating a first hashmap for each unique identifier in the first set of unique identifiers. The unique identifier may be used as the value for the first hashmap and the row ID (UUID) may be used as the key of the hashmap. At block 208, the method may include creating a second hashmap for each table in the first database. In the second hashmap, the table name may be used as the key and reference to the first hashmap may be used as the value. An example structure of this hashmap may look something like: PrimaryDatabaseUUIDCache: tableName->stringToken->rowUUID. The above discussed values and keys are for example use and other values and keys may be used.

At block 210, the method may include creating a third hashmap for each unique row id for each table in the second database. The third hashmap may include row ID(UUID) as the value for the hashmap and the unique identifier as the key. At block 212 the method may include creating a fourth hashmap for each table in the second database. The fourth hashmap may use the table name as the key and reference to the third hashmap as the value. An example structure of this hashmap may look something like: PeerDatabaseUUIDCache: tableName->rowUUID->stringToken. The above discussed values and keys are for example use and other values and keys may be used.

At block 214, the method may include iterating through each unique identifier from the second set of unique identifiers. At block 216, the method may include determining, for each unique identifier iterated through from the second set from the second database, whether the unique identifier matches a unique identifier from the first set of unique identifiers from the first database. If it is determined that there is a unique identifier in the first database that matches the unique identifier from the second database (Yes branch of block 216), at block 218 the method may include adding a mapping of corresponding unique identifier to the primary unique identifier to a hashmap. If it is determined that there is not a unique identifier (primary unique identifier) in the first database that matches the unique identifier (secondary unique identifier) from the second database (No branch of block 216), at block 220 the method may include mapping the unique identifier in the first set of unique identifiers to an empty string to a hashmap.

For example, the method may include iterating through the first and second hashmaps created for the primary database as well as the third and fourth hashmaps created for the peer database. At least one of the unique identifiers may be retrieved from the primary database and the method may include attempting to find a similar string token from the second set of unique identifiers. If the similar string token is found, then the matching unique identifiers are mapped in a fifth hashmap stored on the first database and/or a sixth hashmap stored on the second database. The fifth hashmap may be a mapping of the primary unique identifier to the secondary identifier. The sixth hashmap may be a mapping of the secondary unique identifier to the primary unique identifier. If the matching string token is not found then a fifth hashmap may be created on the first database having a key as the row ID and the value as an empty string. The empty string may be used to denote that the peer database has no row which matches the specific row on given database. The above discussed values and keys are for example use and other values and keys may be used. At block 222 the method may end.

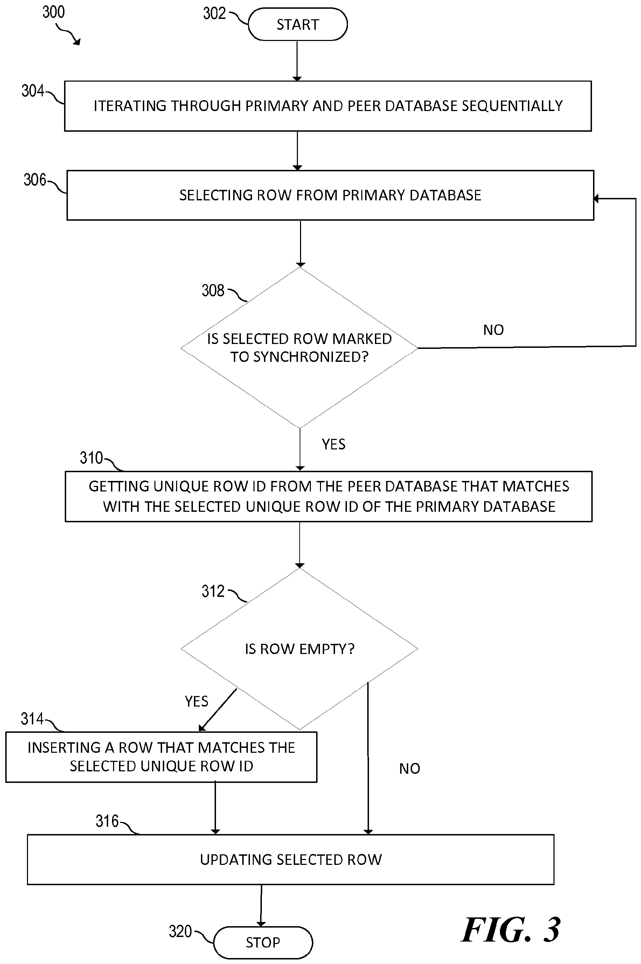

FIG. 3 is a flowchart of an example method 300 for synchronizing databases used in switch configuration. For example, method 300 may be used in an environment similar to system 100, described above in reference to Fig. 1A, to synchronize databases (such as a primary database and a peer database), used for configuring network switches, such as databases created using the method 200 described above in reference to Fig. 2. In this manner, the configuration data for the two switches can be synchronized such that either switch can be used to manage traffic on the network.

Method 300 may start at block 302 and continue to block 304, where the method 300 may include iterating through the primary and secondary database. For each row in the primary database, at block 306, a row may be selected and at block 308 the method may include determining whether the row is marked to be synchronized. If it is determined that the selected row is not marked to be synchronized (No branch of block 308), than the method may return to block 306 and another row may be selected.

If it is determined that the selected row is marked to be synchronized (Yes branch of block 308), than the method may proceed to block 310 where the method may include getting the unique row ID from the peer database that matches with the selected unique row ID of the primary database. The method may be easily able to determine the matching row by using mapping, such as mapping in the fifth and sixth hashmaps discussed above in reference to blocks 218 and 220 of method 200. As described above, the fifth hashmap may be a mapping of the primary unique identifier to the secondary identifier and the sixth hashmap may be a mapping of the secondary unique identifier to the primary unique identifier.

At block 312, the method may include determining whether the mapping shows that the row is empty on the peer database. As discussed above, in some aspects, a matching string token may not be found and a hashmap may be created having a key as the row ID and the value as an empty string. The empty string may be used to denote that the peer database has no row which matches the specific row on given database. If it is determined that the row on the peer database is empty (Yes branch of block 312), than the method may proceed to block 314, where the method may include inserting a row that matches the selected row on the primary database. Inserting the row may include creating an empty row and populating the empty row with the column values from the primary database.

After block 314 or if it is determined that the row on the secondary database is not empty (No branch of block 312), the method may proceed to block 316 where the method may include updating the existing row on the primary database. Updating the existing row may include creating a transaction with the changed/inserted rows and committing the transaction to the peer database. The method 300 may continue until each row in the primary has been iterated through and at block 320 the method may end. The method 300 may also be adapted to iterate through the peer database and synchronize rows from the primary database to the data in the peer database.

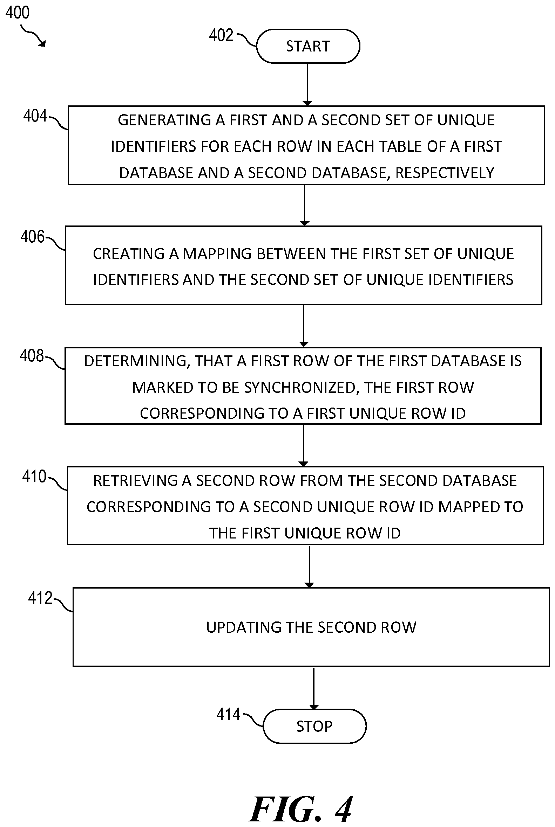

FIG. 4 is a flowchart of an example method 400 for switch configuration synchronization. Method 400 may start at block 402 and continue to block 404, where the method may include generating a first set of unique identifiers for each row in each table of a first database and a second set of unique identifiers for each row in each table of a second database. The first database may be configured to operate a first switch operating traffic on a network and the second database may be configured to operate a second switch on the network. The first switch and the second switch may be configured to operate traffic on the network. Both the first and the second switch may be configured, via the first and second databases, respectively, to actively manage the network. The first and the second switch may be configured to appear as a single virtual switch in a management pane.

At block 406, the method may include creating a mapping between the first set of unique identifiers and the second set of unique identifiers. At block 408, the method may include determining that a first row of the first database is marked to be synchronized and the first row may correspond to a first unique row ID. At block 410, the method may include retrieving a second row of the second database corresponding to a second unique row ID mapped to the first unique row ID. At block 412, the method may include updating the second row. The method may proceed to block 414, where the method may end.

FIG. 5 is a block diagram of an example system 500 for server configuration synchronization. In the example illustrated in FIG. 5, system 500 includes a processor 502 and a machine-readable storage medium 504. In some aspects, processor 502 and machine-readable storage medium 504 may be part of an Application-specific integrated circuit (ASIC). Although the following descriptions refer to a single processor and a single machine-readable storage medium, the descriptions may also apply to a system with multiple processors and multiple machine-readable storage mediums. In such examples, the instructions may be distributed (e.g., stored) across multiple machine-readable storage mediums and the instructions may be distributed (e.g., executed by) across multiple processors.

Processor 502 may be at least one central processing unit (CPU), microprocessor, and/or other hardware devices suitable for retrieval and execution of instructions stored in machine-readable storage medium 504. In the example illustrated in FIG. 5, processor 502 may fetch, decode, and execute instructions 506, 508, 510, 512 and 514 for server configuration synchronization. Processor 502 may include at least one electronic circuit comprising a number of electronic components for performing the functionality of at least one of the instructions in machine-readable storage medium 504. With respect to the executable instruction representations (e.g., boxes) described and shown herein, it should be understood that part or all of the executable instructions and/or electronic circuits included within one box may be included in a different box shown in the figures or in a different box not shown.

Machine-readable storage medium 504 may be any electronic, magnetic, optical, or other physical storage device that stores executable instructions. Thus, machine-readable storage medium 504 may be, for example, Random Access Memory (RAM), an Electrically-Erasable Programmable Read-Only Memory (EEPROM), a storage drive, an optical disc, and the like. Machine-readable storage medium 504 may be disposed within system 500, as shown in FIG. 5. In this situation, the executable instructions may be "installed" on the system 500. Machine-readable storage medium 504 may be a portable, external or remote storage medium, for example, that allows system 500 to download the instructions from the portable/external/remote storage medium. In this situation, the executable instructions may be part of an "installation package". As described herein, machine-readable storage medium 504 may be encoded with executable instructions for context aware data backup. The machine-readable storage medium may be non-transitory.

Referring to FIG. 5, ID create instructions 506, when executed by a processor (e.g., 502), may cause system 500 to create a unique string for each row in a first and second database. The first database may be configured to operate a primary switch operating traffic on a network and the second database may be configured to operate a peer switch on the network. The primary switch and the peer switch configured to operate traffic on the network. Both the first and the second switch may be configured, via the first and second databases, respectively, to actively manage the network. The first and the second switch may be configured to appear as a single virtual switch in a management pane.

Mapping create instructions 508, when executed by a processor (e.g., 502), may cause system 500 to create a mapping between a first set of unique strings created for the first database and a second set of unique strings created for the second database. Synchronization instructions 510, when executed by a processor (e.g., 502), may cause system 500 to identify a row from the first database that is marked to be synchronized, the first row corresponding to a first unique row ID. Retrieve instructions 512, when executed by a processor (e.g., 502), may cause system 500 to retrieve a second row of the second database corresponding to a second unique row ID mapped to the first unique row ID. Update instructions 514, when executed by a processor (e.g., 502), may cause system 500 to update the second row.

The foregoing disclosure describes a number of examples for server configuration synchronization. The disclosed examples may include systems, devices, computer-readable storage media, and methods for server configuration synchronization. For purposes of explanation, certain examples are described with reference to the components illustrated in FIGS. 1A-5. The content type of the illustrated components may overlap, however, and may be present in a fewer or greater number of elements and components. Further, all or part of the content type of illustrated elements may co-exist or be distributed among several geographically dispersed locations. Further, the disclosed examples may be implemented in various environments and are not limited to the illustrated examples.

Further, the sequence of operations described in connection with FIGS. 1A-5 are examples and are not intended to be limiting. Additional or fewer operations or combinations of operations may be used or may vary without departing from the scope of the disclosed examples. Furthermore, implementations consistent with the disclosed examples need not perform the sequence of operations in any particular order. Thus, the present disclosure merely sets forth possible examples of implementations, and many variations and modifications may be made to the described examples.

## Claims

1. A method comprising:
generating a first set of unique identifiers for each row in each table of a first database (110) and a second set of unique identifiers for each row in each table of a second database (110),
**characterised in that** the first database (110) is configured to operate a first switch (104) operating traffic on a network (120) and the second database (110) is configured to operate a second switch (106) on the network (120), the first switch (104) and the second switch (106) configured to operate traffic on the network (120); and
the method further comprises:
creating a mapping between the first set of unique identifiers and the second set of unique identifiers;
determining that a first row of the first database (110) is marked to be synchronized, the first row corresponding to a first unique row ID;
retrieving a second row of the second database (110) corresponding to a second unique row ID mapped to the first unique row ID; and
updating the second row.

2. The method of claim 1 comprising:
determining that the second row is empty; and
populating the second row with a value of the first row.

3. The method of claim 1 comprising:
replacing a second value of the second row with a first value of the first row.

4. The method of claim 1 comprising:
generating the unique identifiers based on index columns in the tables of the first database (110) and the second database (110).

5. The method of claim 1 wherein both the first and the second switch (104, 106) are configured, via the first and second databases (110), respectively, to actively manage the network (120) and/or wherein the first and the second switch (104, 106) are configured to appear as a single virtual switch (118) in a management pane.

6. The method of claim 1 comprising:
creating, for each unique identifier in the first set of unique identifiers, a first hashmap with the unique identifier as a first value and a corresponding row ID as a first key; and
creating, for each table in the first database (110), a second hashmap which has a name of the table as a second key and a reference to the corresponding created hashmap as a second value.

7. The method of claim 6 comprising:
creating, for each row ID for each table in the second database (110), a third hashmap with the row ID as the third value and a corresponding identifier from the second set of identifiers as a third key.
creating, for each table in the second database (110), a fourth hashmap which has a name of the table as a fourth key and a reference to a corresponding created hashmap as a fourth value.

8. The method of claim 7 comprising:
identifying, for each unique identifier in the first set of unique identifiers, a corresponding identifier from the second set of unique identifiers by iterating through each of the first, second, third and fourth hashmaps.

9. The method of claim 8 comprising
creating a fifth hashmap; and for each corresponding identifier identified from the second set of unique identifiers that matches a primary identifier from the first set of unique identifiers, adding a first mapping of the corresponding identifier to the primary identifier to the fifth hashmap; or
creating a fifth hashmap with a mapping for each identifier in the first set of unique identifiers that does not have a corresponding identifier in the second set of unique identifiers, that maps the identifier in the first set of unique identifiers to an empty string.

10. A system (100, 150, 500) comprising;
an ID creator to create a unique string for each row in a first and second database (110);
**characterised in that**:
the first database (110) is configured to operate a first switch (104) operating traffic on a network (120) and the second database (110) is configured to operate a second switch (106) on the network (120), both the first and second switches (104, 106) being configured, via the first and second databases (110), respectively, to actively manage the network (120); and
the system (100, 150, 500) further comprises:
a mapping creator to create a mapping between a first set of unique strings created for the first database (110) and a second set of unique strings created for the second database (110);
a synchronization determiner to identify a first row from the first database (110) that is marked to be synchronized, the row corresponding to a unique row ID;
a retriever to retrieve a second row of the second database (110) corresponding to the identified row; and
a row updater to update the second row.

11. The system (100, 150, 500) of claim 10 wherein either the first or the second switch (104,106) is configured as a primary switch (104) to operate traffic on the network (120) and the second switch (106) is configured to operate traffic on the network (120) in the event that the primary switch (104) is unable.

12. The system (100, 150, 500) of claim 10 comprising the hashmap handler to:
create, for each unique identifier in the first set of unique identifiers, a first hashmap with the unique identifier as a first value and a corresponding unique row ID as a first key;
create, for each table in the first database (110), a second hashmap which has a name of the table as a second key and a reference to the corresponding created hashmap as a second value;
create, for each unique row ID for each table in the second database (110), a third hashmap with the unique row ID as the third value and a corresponding identifier from the second set of identifiers as a third key; and
create, for each table in the second database (110), a fourth hashmap which has a name of the table as a fourth key and a reference to a corresponding created hashmap as a fourth value.

13. The system (100, 150, 500) of claim 12, the hashmap handler to:
identify, for each unique identifier in the first set of unique identifiers, a corresponding identifier from the set of unique identifiers,
wherein the hashmap handler is optionally to:
create a fifth hashmap, and for each corresponding identifier identified from the second set of unique identifiers that matches a primary identifier from the first set of unique identifiers, adding a first mapping of the corresponding identifier to the primary identifier and a second mapping of the primary identifier to the corresponding identifier to the fifth hashmap; or
add, to a fifth hashmap, a mapping, for each identifier in the first set of unique identifiers that does not have a corresponding identifier in the second set of unique identifiers, that maps the identifier in the first set of unique identifiers to an empty string.

14. A non-transitory machine-readable storage medium (504) encoded with instructions, the instructions executable by a processor (152, 502) of a system (100, 150, 500) to cause the system (100, 150, 500) to:
create a unique string for each row in a first and second database (110) **characterised in that**:
the first database (110) is configured to operate a first switch (104) operating traffic on a network (120) and the second database (110) is configured to operate a second switch (106) on the network (120), the first switch (104) and the second switch (106) configured to operate traffic on the network (120); and
the instructions further comprise instructions to:
create a mapping between a first set of unique strings created for the first database (110) and a second set of unique strings created for the second database (110);
identify a first row from the first database (110) that is marked to be synchronized, the first row corresponding to a first unique row ID;
retrieve a second row of the second database (110) corresponding to a second unique row ID mapped to the first unique row ID; and
update the second row.

15. The non-transitory machine-readable storage medium (504) of claim 14, comprising instructions to:
(i) determine that the second row is empty; and populate the second row with a value of the first row; or
(ii) replace a second value of the second row with a first value of the first row.

## Patentansprüche

1. Verfahren, umfassend:
Generieren eines ersten Satzes eindeutiger Kennungen für jede Zeile in jeder Tabelle einer ersten Datenbank (110) und eines zweiten Satzes eindeutiger Kennungen für jede Zeile in jeder Tabelle einer zweiten Datenbank (110),
**dadurch gekennzeichnet, dass** die erste Datenbank (110) konfiguriert ist, um einen ersten Schalter (104) zu betreiben, der Verkehr auf einem Netzwerk (120) betreibt, und die zweite Datenbank (110) konfiguriert ist, um einen zweiten Schalter (106) auf dem Netzwerk (120) zu betreiben, wobei der erste Schalter (104) und der zweite Schalter (106) konfiguriert sind, um Verkehr auf dem Netzwerk (120) zu betreiben; und
das Verfahren ferner umfasst:
Erstellen einer Zuordnung zwischen dem ersten Satz eindeutiger Kennungen und dem zweiten Satz eindeutiger Kennungen;
Bestimmen, dass eine erste Zeile der ersten Datenbank (110) als zu synchronisieren markiert ist, wobei die erste Zeile einer ersten eindeutigen Zeilen-ID entspricht;
Abrufen einer zweiten Zeile der zweiten Datenbank (110), die einer zweiten eindeutigen Zeilen-ID entspricht, die der ersten eindeutigen Zeilen-ID zugeordnet ist; und
Aktualisieren der zweiten Zeile.

2. Verfahren nach Anspruch 1, umfassend:
Bestimmen, dass die zweite Zeile leer ist; und
Füllen der zweiten Zeile mit einem Wert aus der ersten Zeile.

3. Verfahren nach Anspruch 1, umfassend:
Ersetzen eines zweiten Werts der zweiten Zeile durch einen ersten Wert der ersten Zeile.

4. Verfahren nach Anspruch 1, umfassend:
Generieren der eindeutigen Kennungen basierend auf Indexspalten in den Tabellen der ersten Datenbank (110) und der zweiten Datenbank (110).

5. Verfahren nach Anspruch 1, wobei sowohl der erste als auch der zweite Schalter (104, 106) über die erste bzw. zweite Datenbank (110) konfiguriert sind, um das Netzwerk (120) aktiv zu verwalten, und/oder wobei der erste und der zweite Schalter (104, 106) konfiguriert sind, um als ein einziger virtueller Schalter (118) in einem Verwaltungsbereich zu erscheinen.

6. Verfahren nach Anspruch 1, umfassend:
Erstellen einer ersten Hashmap mit der eindeutigen Kennung als ein erster Wert und einer entsprechenden Zeilen-ID als ein erster Schlüssel für jede eindeutige Kennung in dem ersten Satz eindeutiger Kennungen; und
Erstellen einer zweiten Hashmap, die einen Namen der Tabelle als einen zweiten Schlüssel und einen Verweis auf die entsprechende erstellte Hashmap als einen zweiten Wert für jede Tabelle in der ersten Datenbank (110) aufweist.

7. Verfahren nach Anspruch 6, umfassend:
Erstellen einer dritten Hashmap mit der Zeilen-ID als der dritte Wert und einer entsprechenden Kennung aus dem zweiten Satz von Kennungen als der dritte Schlüssel für jede Zeilen-ID für jede Tabelle in der zweiten Datenbank (110).
Erstellen einer vierten Hashmap, die einen Namen der Tabelle als einen vierten Schlüssel und einen Verweis auf eine entsprechende erstellte Hashmap als einen vierten Wert für jede Tabelle in der zweiten Datenbank (110) aufweist.

8. Verfahren nach Anspruch 7, umfassend:
Identifizieren einer entsprechenden Kennung aus dem zweiten Satz eindeutiger Kennungen durch Iterieren durch jede der ersten, zweiten, dritten und vierten Hashmap für jede eindeutige Kennung in dem ersten Satz eindeutiger Kennungen.

9. Verfahren nach Anspruch 8, umfassend:
Erstellen einer fünften Hashmap; und für jede entsprechende Kennung, die aus dem zweiten Satz eindeutiger Kennungen identifiziert wird und mit einer Primärkennung aus dem ersten Satz eindeutiger Kennungen übereinstimmt, Hinzufügen einer ersten Zuordnung der entsprechenden Kennung auf die Primärkennung zu der fünften Hashmap; oder
Erstellen einer fünften Hashmap mit einer Zuordnung für jede Kennung in dem ersten Satz eindeutiger Kennungen, die keine entsprechende Kennung in dem zweiten Satz eindeutiger Kennungen aufweist, die die Kennung in dem ersten Satz eindeutiger Kennungen auf eine leere Zeichenfolge zuordnet.

10. System (100, 150, 500), umfassend;
einen ID-Ersteller zum Erstellen einer eindeutigen Zeichenfolge für jede Zeile in einer ersten und einer zweiten Datenbank (110); **dadurch gekennzeichnet, dass**:
die erste Datenbank (110) konfiguriert ist, um einen ersten Schalter (104) zu betreiben, der Verkehr auf einem Netzwerk (120) betreibt, und die zweite Datenbank (110) konfiguriert ist, um einen zweiten Schalter (106) auf dem Netzwerk (120) zu betreiben, wobei sowohl der erste als auch der zweite Schalter (104, 106) über die erste bzw. zweite Datenbank (110) jeweils konfiguriert sind, um das Netzwerk (120) aktiv zu verwalten; und das System (100, 150, 500) ferner umfasst:
einen Zuordnungsersteller zum Erstellen einer Zuordnung zwischen einem ersten Satz eindeutiger Zeichenfolgen, der für die erste Datenbank (110) erstellt wird, und einem zweiten Satz eindeutiger Zeichenfolgen, der für die zweite Datenbank (110) erstellt wird;
einen Synchronisierungsbestimmer zum Identifizieren einer ersten Zeile aus der ersten Datenbank (110), die als zu synchronisieren markiert ist, wobei die Zeile einer eindeutigen Zeilen-ID entspricht;
einen Abrufer zum Abrufen einer zweiten Zeile der zweiten Datenbank (110), die der identifizierten Zeile entspricht; und einen Zeilenaktualisierer zum Aktualisieren der zweiten Zeile.

11. System (100, 150, 500) nach Anspruch 10, wobei entweder der erste oder der zweite Schalter (104, 106) als ein Primärschalter (104) konfiguriert ist, um Verkehr auf dem Netzwerk (120) zu betreiben, und der zweite Schalter (106) konfiguriert ist, um Verkehr auf dem Netzwerk (120) zu betreiben, falls der Primärschalter (104) dazu nicht in der Lage ist.

12. System (100, 150, 500) nach Anspruch 10, das den Hashmap-Handler umfasst zum:
Erstellen einer ersten Hashmap mit der eindeutigen Kennung als einen ersten Wert und einer entsprechenden eindeutigen Zeilen-ID als einen ersten Schlüssel für jede eindeutige Kennung in dem ersten Satz eindeutiger Kennungen;
Erstellen einer zweiten Hashmap, die einen Namen der Tabelle als einen zweiten Schlüssel und einen Verweis auf die entsprechende erstellte Hashmap als einen zweiten Wert aufweist für jede Tabelle in der ersten Datenbank (110);
Erstellen einer dritten Hashmap mit der eindeutigen Zeilen-ID als der dritte Wert und einer entsprechenden Kennung aus dem zweiten Satz von Kennungen als einen dritten Schlüssel für jede eindeutige Zeilen-ID für jede Tabelle in der zweiten Datenbank (110); und
Erstellen einer vierten Hashmap, die einen Namen der Tabelle als einen vierten Schlüssel und einen Verweis auf eine entsprechende erstellte Hashmap als einen vierten Wert aufweist für jede Tabelle in der zweiten Datenbank (110).

13. System (100, 150, 500) nach Anspruch 12, das den Hashmap-Handler umfasst zum:
Identifizieren einer entsprechenden Kennung aus dem Satz eindeutiger Kennungen für jede eindeutige Kennung in dem ersten Satz eindeutiger Kennungen,
wobei der Hashmap-Handler optional:
eine fünfte Hashmap erstellen soll, und für jede entsprechende Kennung, die aus dem zweiten Satz eindeutiger Kennungen identifiziert wird, die mit einer Primärkennung aus dem ersten Satz eindeutiger Kennungen übereinstimmt, eine erste Zuordnung der entsprechenden Kennung zu der Primärkennung, und eine zweite Zuordnung der Primärkennung auf die entsprechende Kennung zu der fünften Hashmap hinzufügen soll; oder
zu einer fünften Hashmap eine Zuordnung für jede Kennung in dem ersten Satz eindeutiger Kennungen hinzufügen soll, die keine entsprechende Kennung in dem zweiten Satz eindeutiger Kennungen aufweist, die die Kennung in dem ersten Satz eindeutiger Kennungen auf eine leere Zeichenfolge zuordnet.

14. Nichtflüchtiges maschinenlesbares Speichermedium (504), das mit Anweisungen codiert ist, wobei die Anweisungen von einem Prozessor (152, 502) eines Systems (100, 150, 500) ausführbar sind, um das System (100, 150, 500) zu veranlassen:
eine eindeutige Zeichenfolge für jede Zeile in einer ersten und
einer zweiten Datenbank (110) zu erstellen;
**dadurch gekennzeichnet, dass**:
die erste Datenbank (110) konfiguriert ist, um einen ersten Schalter (104) zu betreiben, der Verkehr auf einem Netzwerk (120) betreibt, und die zweite Datenbank (110) konfiguriert ist, um einen zweiten Schalter (106) auf dem Netzwerk (120) zu betreiben, wobei der erste Schalter (104) und der zweite Schalter (106) konfiguriert sind, um Verkehr auf dem Netzwerk (120) zu betreiben; und
die Anweisungen ferner Anweisungen umfassen zum:
Erstellen einer Zuordnung zwischen einem ersten Satz eindeutiger Zeichenfolgen, der für die erste Datenbank (110) erstellt ist, und einem zweiten Satz eindeutiger Zeichenfolgen, der für die zweite Datenbank (110) erstellt ist;
Identifizieren einer ersten Zeile aus der ersten Datenbank (110), die als zu synchronisieren markiert ist, wobei die erste Zeile einer ersten eindeutigen Zeilen-ID entspricht;
Abrufen einer zweiten Zeile der zweiten Datenbank (110), die einer zweiten eindeutigen Zeilen-ID entspricht, die der ersten eindeutigen Zeilen-ID zugeordnet ist; und
Aktualisieren der zweiten Zeile.

15. Nichtflüchtiges maschinenlesbares Speichermedium (504) nach Anspruch 14, das Anweisungen umfasst zum:
(i) Bestimmen, dass die zweite Zeile leer ist; und Füllen der zweiten Zeile mit einem Wert der ersten Zeile; oder
(ii) Ersetzen eines zweiten Werts der zweiten Zeile durch einen ersten Wert der ersten Zeile.

## Revendications

1. Procédé comprenant :
la génération d'un premier ensemble d'identifiants uniques pour chaque ligne dans chaque table d'une première base de données (110) et un second ensemble d'identifiants uniques pour chaque ligne dans chaque table d'une seconde base de données (110),
**caractérisé en ce que** la première base de données (110) est configurée pour faire fonctionner un premier commutateur (104) gérant le trafic sur un réseau (120) et la seconde base de données (110) est configurée pour faire fonctionner un second commutateur (106) sur le réseau (120), le premier commutateur (104) et le second commutateur (106) étant configurés pour gérer le trafic sur le réseau (120) ; et
le procédé comprend en outre :
la création d'un mappage entre le premier ensemble d'identifiants uniques et le second ensemble d'identifiants uniques ;
la détermination qu'une première ligne de la première base de données (110) est marquée pour être synchronisée, la première ligne correspondant à un premier ID de ligne unique ;
la récupération d'une seconde ligne de la seconde base de données (110) correspondant à un second ID de ligne unique mappé au premier ID de ligne unique ; et
la mise à jour de la seconde ligne.

2. Procédé selon la revendication 1, comprenant :
la détermination que la seconde ligne est vide ; et
le remplissage de la seconde ligne avec une valeur de la première ligne.

3. Procédé selon la revendication 1, comprenant :
le remplacement d'une deuxième valeur de la seconde ligne par une première valeur de la première ligne.

4. Procédé selon la revendication 1, comprenant :
la génération des identifiants uniques sur la base des colonnes d'index dans les tables de la première base de données (110) et de la seconde base de données (110).

5. Procédé selon la revendication 1, dans lequel à la fois le premier et le second commutateurs (104, 106) sont configurés, via les première et seconde bases de données (110), respectivement, pour gérer activement le réseau (120) et/ou dans lequel le premier et le second commutateurs (104, 106) sont configurés pour apparaître comme un seul commutateur virtuel (118) dans un volet de gestion.

6. Procédé selon la revendication 1, comprenant :
la création, pour chaque identifiant unique dans le premier ensemble d'identifiants uniques, d'une première carte de hachage avec l'identifiant unique comme première valeur et un ID de ligne correspondant comme première clé ; et
la création, pour chaque table dans la première base de données (110), d'une deuxième carte de hachage qui a un nom de la table comme deuxième clé et une référence à la carte de hachage créée correspondante comme deuxième valeur.

7. Procédé selon la revendication 6, comprenant :
la création, pour chaque ID de ligne pour chaque table dans la seconde base de données (110), d'une troisième carte de hachage avec l'ID de ligne comme troisième valeur et un identifiant correspondant du second ensemble d'identifiants comme troisième clé.
la création, pour chaque table dans la seconde base de données (110), d'une quatrième carte de hachage qui a un nom de la table comme quatrième clé et une référence à une carte de hachage créée correspondante comme quatrième valeur.

8. Procédé selon la revendication 7, comprenant :
l'identification, pour chaque identifiant unique dans le premier ensemble d'identifiants uniques, d'un identifiant correspondant du second ensemble d'identifiants uniques en itérant à travers chacune des première, deuxième, troisième et quatrième cartes de hachage.

9. Procédé selon la revendication 8, comprenant :
la création d'une cinquième carte de hachage ; et pour chaque identifiant correspondant identifié à partir du second ensemble d'identifiants uniques qui correspond à un identifiant principal à partir du premier ensemble d'identifiants uniques, l'ajout d'un premier mappage de l'identifiant correspondant à l'identifiant principal à la cinquième carte de hachage ; ou
la création d'une cinquième carte de hachage avec un mappage pour chaque identifiant dans le premier ensemble d'identifiants uniques qui n'a pas d'identifiant correspondant dans le second ensemble d'identifiants uniques, qui mappe l'identifiant dans le premier ensemble d'identifiants uniques à une chaîne vide.

10. Système (100, 150, 500) comprenant ;
un créateur d'ID pour créer une chaîne unique pour chaque ligne dans une première et une seconde bases de données (110) ; **caractérisé en ce que** :
la première base de données (110) est configurée pour faire fonctionner un premier commutateur (104) gérant le trafic sur un réseau (120) et la seconde base de données (110) est configurée pour faire fonctionner un second commutateur (106) sur le réseau (120), à la fois les premier et second commutateurs (104, 106) étant configurés, via les première et seconde bases de données (110), respectivement, pour gérer activement le réseau (120) ; et le système (100, 150, 500) comprend en outre :
un créateur de mappage pour créer un mappage entre un premier ensemble de chaînes uniques créées pour la première base de données (110) et un second ensemble de chaînes uniques créées pour la seconde base de données (110) ;
un déterminateur de synchronisation pour identifier une première ligne de la première base de données (110) qui est marquée pour être synchronisée, la ligne correspondant à un ID de ligne unique ;
un récupérateur pour récupérer une seconde ligne de la seconde base de données (110) correspondant à la ligne identifiée ; et un programme de mise à jour de ligne pour mettre à jour la seconde ligne.

11. Système (100, 150, 500) selon la revendication 10, dans lequel le premier ou le second commutateur (104, 106) est configuré comme un commutateur principal (104) pour gérer le trafic sur le réseau (120) et le second commutateur (106) est configuré pour gérer le trafic sur le réseau (120) dans le cas où le commutateur principal (104) en est incapable.

12. Système (100, 150, 500) selon la revendication 10, comprenant le gestionnaire de carte de hachage pour :
créer, pour chaque identifiant unique dans le premier ensemble d'identifiants uniques, une première carte de hachage avec l'identifiant unique comme première valeur et un ID de ligne correspondant comme première clé ;
créer, pour chaque table dans la première base de données (110), une deuxième carte de hachage qui a un nom de la table comme deuxième clé et une référence à la carte de hachage créée correspondante comme deuxième valeur ;
créer, pour chaque ID de ligne unique pour chaque table dans la seconde base de données (110), une troisième carte de hachage avec l'ID de ligne unique comme troisième valeur et un identifiant correspondant du second ensemble d'identifiants comme troisième clé ; et
créer, pour chaque table dans la seconde base de données (110), une quatrième carte de hachage qui a un nom de la table comme quatrième clé et une référence à une carte de hachage créée correspondante comme quatrième valeur.

13. Système (100, 150, 500) selon la revendication 12, le gestionnaire de carte de hachage pour :
identifier, pour chaque identifiant unique dans le premier ensemble d'identifiants uniques, un identifiant correspondant parmi l'ensemble d'identifiants uniques,
dans lequel le gestionnaire de carte de hachage est facultativement pour :
créer une cinquième carte de hachage, et pour chaque identifiant correspondant identifié à partir du second ensemble d'identifiants uniques qui correspond à un identifiant principal à partir du premier ensemble d'identifiants uniques, ajouter un premier mappage de l'identifiant correspondant à l'identifiant principal et un second mappage de l'identifiant principal à l'identifiant correspondant à la cinquième carte de hachage ; ou
ajouter, à une cinquième carte de hachage, un mappage, pour chaque identifiant dans le premier ensemble d'identifiants uniques qui n'a pas d'identifiant correspondant dans le second ensemble d'identifiants uniques, qui mappe l'identifiant dans le premier ensemble d'identifiants uniques à une chaîne vide.

14. Support de stockage non transitoire lisible par machine (504) codé avec des instructions, les instructions pouvant être exécutées par un processeur (152, 502) d'un système (100, 150, 500) pour amener le système (100, 150, 500) à :
créer une chaîne unique pour chaque ligne dans une première et une seconde base de données (110)
**caractérisé en ce que** :
la première base de données (110) est configurée pour faire fonctionner un premier commutateur (104) gérant le trafic sur un réseau (120) et la seconde bases de données (110) est configurée pour faire fonctionner un second commutateur (106) sur le réseau (120), le premier commutateur (104) et le second commutateur (106) étant configurés pour gérer le trafic sur le réseau (120) ; et
les instructions comprennent en outre des instructions pour :
créer un mappage entre un premier ensemble de chaînes uniques créées pour la première base de données (110) et un second ensemble de chaînes uniques créées pour la seconde base de données (110) ;
identifier une première ligne de la première base de données (110) qui est marquée pour être synchronisée, la première ligne correspondant à un premier ID de ligne unique ;
récupérer une seconde ligne de la seconde base de données (110) correspondant à un second ID de ligne unique mappé au premier ID de ligne unique ; et
mettre à jour la seconde ligne.

15. Support de stockage non transitoire lisible par machine (504) selon la revendication 14, comprenant des instructions pour :
(i) déterminer que la seconde ligne est vide ; et remplir la seconde ligne avec une valeur de la première ligne ; ou
(ii) remplacer une deuxième valeur de la seconde ligne par une première valeur de la première ligne.
